# EUROPÄISCHE PATENTSCHRIFT

(11) **EP 2 159 552 B1**
(45) Veröffentlichungstag und Bekanntmachung des Hinweises auf die Patenterteilung: **13.02.2019**
(21) Anmeldenummer: 09009684.3
(22) Anmeldetag: 27.07.2009
(51) Int. Cl.: G01F 1/84

(54) **Massedurchflußmeßgerät**
Mass flow rate measuring device
Appareil de mesure du débit massique

(30) Priorität: 27.08.2008 DE 102008039867
(43) Veröffentlichungstag der Anmeldung: 03.03.2010
(73) Patentinhaber: Krohne AG, 4019 Basel (CH)
(72) Erfinder: Hussain, Yousif, Dr., Weston Favell Nordhampton / NN3 3DA (GB); Rolph, Christopher, Hartwell, Northants NN7 2HA (GB); Wang, Tao Dr., Canterbury T2 8HP (GB)
(74) Vertreter: Gesthuysen Patent- und Rechtsanwälte

(56) Entgegenhaltungen:
- EP-A- 0 119 638
- WO-A-2006/091199
- WO-A1-02/052230
- WO-A2-96/08697
- US-A- 4 879 910
- US-A- 5 090 253
- US-A- 5 230 254

## Beschreibung

Die Erfindung betrifft ein Massedurchflußmeßgerät, das nach dem Coriolis-Prinzip arbeitet, gemäß den Mermalen des Oberbegriffs von Patentanspruch 1.

Nach dem Coriolis-Prinzip arbeitende Massedurchflußmeßgeräte sind grundsätzlich seit vielen Jahren bekannt, sie erlauben die Bestimmung des Massedurchsatzes des durch das Meßrohr strömenden Mediums mit hoher Genauigkeit. Zur Ermittlung des Massedurchsatzes wird das Coriolis-Meßrohr mit einem Schwingungserzeuger oder auch mit mehreren Schwingungserzeugern zu Schwingungen - insbesondere mit der Eigenfrequenz einer bestimmten Eigenform einer Schwingung - angeregt, und die tatsächlich resultierenden Schwingungen werden mit Schwingungsaufnehmern erfaßt und ausgewertet. Die Auswertung besteht beispielsweise darin, daß die Phasenverschiebung zwischen den von zwei Schwingungsaufnehmern jeweils erfaßten Schwingungen ermittelt wird, wobei diese Phasenverschiebung ein direktes Maß für den Massedurchsatz ist. Es sind Coriolis-Massedurchflußmeßgeräte bekannt, die ein einziges Meßrohr aufweisen wie auch solche, die genau zwei Meßrohre aufweisen, wobei die Meßrohre entweder im wesentlichen gerade erstreckt oder gekrümmt sind. Massedurchflußmeßgeräte mit zwei Meßrohren weisen den Vorteil auf, daß - eine gegensinnige Anregung der benachbart angeordneten Meßrohre vorausgesetzt - der Schwerpunkt des zu Schwingungen angeregten Systems insgesamt erhalten bleibt und das Massedurchflußmeßgerät damit nach außen hin mechanisch neutral ist.

Die Meßrohre der Massedurchflußmeßgeräte haben in Abhängigkeit von der Menge der zu transportierenden Massen ganz unterschiedliche Nennweiten mit unterschiedlichen Wandstärken. Die Meßrohre müssen insgesamt so ausgelegt werden, daß sie den erforderlichen Drücken und auftretenden mechanischen Spannungen standhalten können, daß sie mit vertretbarem Energieaufwand zu gut erfaßbaren Schwingungen anregbar sind, die Eigenfrequenzen des durchströmten Meßrohrs in einem gewünschten Bereich liegen und die Meßrohre dem Massestrom keinen ungebührlichen Widerstand entgegensetzen. Um größere Masseströme erfassen zu können, können nicht einfach die Nennweiten der Meßrohre eines bekannten Massedurchflußmeßgeräts vergrößert werden, da dadurch automatisch das Schwingverhalten der Meßrohre verändert wird. Daher geht eine Vergrößerung der Nennweite von Meßrohren häufig mit einer Verlängerung der Meßrohre und damit mit einer Vergrößerung der Abmessungen der gesamten Massedurchflußmeßgeräte einher.

Aus dem Stand der Technik sind Coriolis-Massedurchflussmessgeräte bekannt, die mit einer Mehrzahl von Messrohren arbeiten, so dass sich parallele Strömungspfade ergeben. Dies trifft beispielsweise zu auf die EP 0 119 638 A1 (zylindrisch angeordnete Messrohre), die US 5,230,254 A (Messrohre in sternförmigem Haltekranz), die US 5,090,253 A (mehrere U-förmige Messrohre), die US 4,879,910 A (Mehrzahl parallel verlaufender Messrohre), die WO 2006/091199 A (parallele Messrohre mit separaten Strömungsauslässen), die WO 96/08697 A (vier parallele Messrohre) und die WO 02/052230 A1 (ebenfalls vier parallele Messrohre).

Aufgabe der vorliegenden Erfindung ist es, solche Massedurchflußmeßgeräte, die nach dem Coriolis-Prinzip arbeiten, anzugeben, die geeignet sind, einen großen Massedurchsatz bei kompakten Abmessungen des Massedurchflußmeßgeräts und eine Anregung von Schwingungen bei vergleichsweise geringen Energien zu ermöglichen.

Die aufgezeigte Aufgabe ist erfindungsgemäß zunächst und im wesentlichen bei dem in Rede stehenden Massedurchflußmeßgerät mit den Merkmalen des Kennzeichnungsteils von Patentanspruch 1 gelöst.

Erfindungsgemäß ist erkannt worden, daß eine Vergrößerung des Strömungsquerschnitts und damit eine für größere Masseströme geeignete Ausgestaltung eines Coriolis-Meßgeräts nicht nur dadurch erzielt werden kann, daß die Nennweiten der Meßrohre der ein- oder zweirohrigen Massedurchflußmeßgeräte vergrößert werden, sondern auch dadurch, daß weitere Meßrohre vorgesehen werden. Durch die weiteren Meßrohre kann vorteilhafterweise bewirkt werden, daß das Schwingverhalten der einzelnen Meßrohre beibehalten wird und die Meßrohre weiterhin mit solchen Schwingungserzeugern angeregt werden können, die zuvor eigentlich nur für kleinere Massedurchflußmeßgeräte geeignet waren, die also nur einen geringeren Massedurchsatz bewältigen konnten. Dadurch können auch Massedurchflußmeßgeräte realisiert werden, die im Verhältnis zu bekannten ein- oder zweirohrigen Massedurchflußmeßgeräten vergleichsweise kurzbauend sind, da die Vergrößerung des Summen-Strömungsquerschnitts der Meßrohre nicht mit einer Verlängerung der Meßrohre kompensiert werden muß, da die einzelnen verwendeten Meßrohre von ihren Querschnitten nicht zwingend verändert werden müssen.

Besonders vorteilhaft ist es, wenn die Meßrohre - senkrecht zur Durchströmungsrichtung gesehen - dicht angeordnet sind, also der von den Meßrohren umfaßte Strömungsquerschnitt auf möglichst kleinem Raum realisiert ist. Erfindungsgemäße Massedurchflußmeßgeräte ermöglichen unter Verwendung von Standard-Meßrohren, also von Meßrohren mit kreisförmigen Querschnitt, eine bestmögliche Raumausnutzung, jedenfalls eine deutlich bessere Raumausnutzung als bei solchen Massedurchflußmeßgeräten, die nur ein einziges Meßrohr oder zwei Meßrohre verwenden.

In einer besonders bevorzugten Ausgestaltung des erfindungsgemäßen Massedurchflußmeßgeräts sind die Meßrohre Meßrohrgruppen zugeordnet, wobei die Meßrohre einer Meßrohrgruppe mechanisch miteinander gekoppelt sind. Mit dieser mechanischen Kopplung sind nicht die ein- und auslaufseitigen Kopplungen der Meßrohre gemeint, die sich zwangsläufig dadurch ergeben, daß die Meßrohre ein- und auslaufseitig in Anschlußstücken auseinander- bzw. zusammenlaufen, wobei die Anschlußstücke mit Flanschen dazu dienen, die Meßrohre insgesamt an ein Rohrleitungssystem anschließen zu können. Gemeint sind vielmehr mechanische Kopplungen, die innerhalb des Schwingbereichs der Meßrohre vorgesehen sind. Durch die mechanische Kopplung der Meßrohre einer Meßrohrgruppe werden die Meßrohre auch funktional aneinander zugeordnet und die Meßrohranordnung in ihrem Schwingverhalten vereinfacht.

In einer besonders bevorzugten Ausgestaltung der Erfindung sind die Meßrohre einer Meßrohrgruppe entlang ihrer Erstreckung in Durchströmungsrichtung punktuell, also an einzelne Stellen, mechanisch gekoppelt, insbesondere durch Tragvorrichtungen der Schwingungserzeuger und/oder der Schwingungsaufnehmer. Dadurch wird erreicht, daß die Meßrohrgruppen funktional als Einheit anregbar sind und die Schwingungen funktional von den Meßrohrgruppen als Einheit erfaßbar sind. In Abhängigkeit von den angeregten Eigenformen der Meßrohrschwingungen bietet es sich an, je nach Anzahl der Meßrohrgruppen, über die Längserstreckung der Meßrohre in den Meßrohrgruppen einen oder mehrere Schwingungserzeuger zur Anregung der Schwingungen und/oder Schwingungsaufnehmer zur Erfassung der angeregten Schwingungen vorzusehen.

In einer anderen bevorzugten Ausgestaltung der Erfindung sind die Meßrohre einer Meßrohrgruppe - in Durchströmungsrichtung gesehen - im wesentlichen über ihre gesamte Erstreckung miteinander verbunden, insbesondere nämlich miteinander verlötet oder verschweißt. Durch diese mechanische Kopplung wird erreicht, daß die Meßrohre einer Meßrohrgruppe ohne verbleibende Freiheitsgerade für eine individuelle Bewegung aneinander gebunden sind. Gleichwohl läßt sich auch mit einer solchen Anordnung eine insgesamt kompaktere Bauform eines Massedurchflußmeßgeräts, das nach dem Coriolis-Prinzip arbeitet, realisieren, als mit ein- oder zweirohrigen Massedurchflußmeßgeräten.

Erfindungsgemäß ist vorgesehen, daß die Meßrohre oder auch Meßrohrgruppen paarweise einander zugeordnet sind und jedes Paar mit separaten Schwingungserzeugern und/oder mit separaten Schwingungsaufnehmern ausgestattet ist. Dadurch ist es möglich, zwei verschiedene Paare von Meßrohren oder Meßrohrgruppen unabhängig voneinander anzuregen und auszuwerten, insbesondere unabhängig voneinander in verschiedenen Eigenformen anzuregen und die Schwingungen der Eigenformen separat auszuwerten, ohne daß sich die angeregten Schwingungen gegenseitig überlagern.

Im einzelnen gibt es nun eine Vielzahl von Möglichkeiten, das erfindungsgemäße Massedurchflußmeßgerät, das nach dem Coriolis-Prinzip arbeitet, auszugestalten und weiterzubilden. Dazu wird verwiesen auf die dem Patentanspruch 1 nachgeordneten Patentansprüche sowie auf die nachfolgende Beschreibung eines bevorzugten Ausführungsbeispiels der Erfindung unter Bezugnahme auf die Zeichnung. In der Zeichnung zeigen
- Fig. 1: eine perspektivische Darstellung eines erfindungsgemäßen Massedurchflußmeßgeräts,
- Fig. 2: eine Seitenansicht des Massedurchflußmeßgeräts gemäß Fig. 1 in Durchströmungsrichtung,
- Fig. 3: eine perspektivische Darstellung eines Massedurchflußmeßgeräts mit einer mechanischen Fixierung,
- Fig. 4a, 4b: eine schematische Darstellung eines erfindungsgemäßen Massedurchflußmeßgeräts mit einer punktuellen mechanischen Fixierung zwischen Meßrohren einer Meßrohrgruppe und
- Fig. 5a, 5b: eine schematische Darstellung eines erfindungsgemäßen Massedurchflußmeßgeräts mit einer durchgehenden mechanischen Fixierung von Meßrohren einer Meßrohrgruppe.

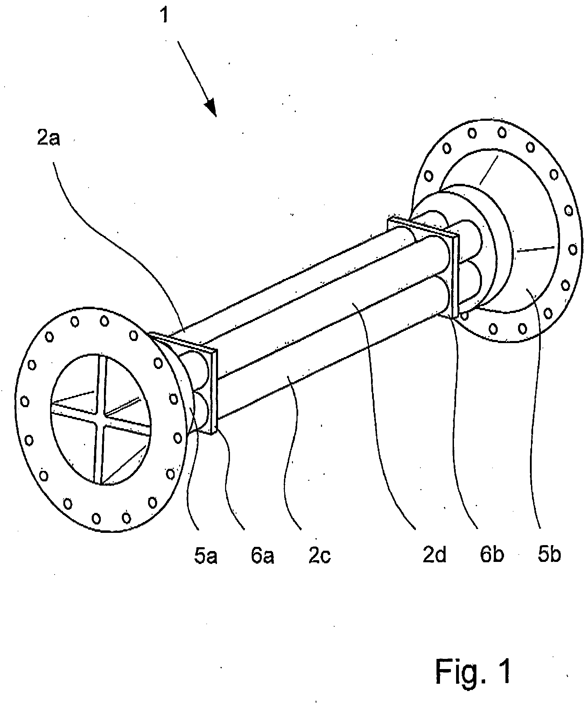

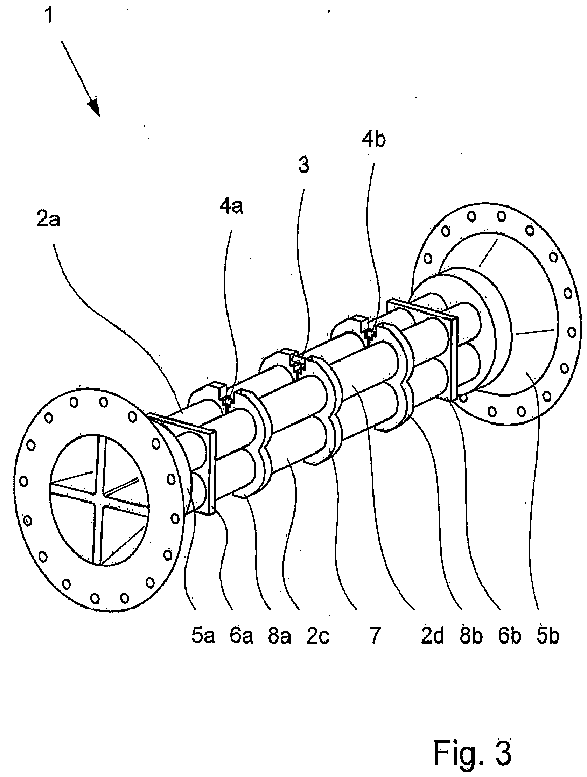

In den Fig. 1 bis 5 sind - vollständig oder teilweise - Massedurchflußmeßgeräte 1 dargestellt, die nach dem Coriolis-Prinzip arbeiten. Zu erkennen sind jeweils von einem Medium durchströmbare Meßrohre 2a, 2b, 2c, 2d, die von einem Schwingungserzeuger 3 zu Schwingungen anregbar sind, wobei die angeregten Schwingungen dann von Schwingungsaufnehmern 4a, 4b erfaßbar sind (Fig. 3). Die dargestellten Massedurchflußmeßgeräte 1 zeichnen sich dadurch aus, daß nicht nur - wie aus dem Stand der Technik bekannt - ein Meßrohr 2 vorhanden ist bzw. zwei Meßrohre 2 vorhanden sind, sondern mehr als zwei Meßrohre 2 vorgesehen sind, im vorliegenden Fall nämlich insgesamt vier Meßrohre 2a, 2b, 2c, 2d.

Die Mehrzahl an Meßrohren 2a, 2b, 2c, 2d gestattet es, das Massedurchflußmeßgerät 1 sehr kompakt zu gestalten, da die Verwendung mehrerer kleinerer Meßrohre 2a, 2b, 2c, 2d insgesamt zu einem größeren zur Verfügung stehenden Strömungsquerschnitt führt, ohne die mechanischen Eigenschaften der einzelnen Meßrohre 2a, 2b, 2c und 2d nachteilig zu beeinflussen, so daß das Massedurchflußmeßgerät 1 trotz des größeren erzielten Strömungsquerschnitts kurzbauend realisierbar ist.

Die Verwendung von mehr als zwei Meßrohren 2a, 2b, 2c und 2d hat darüber hinaus den vorteilhaften Effekt, daß die Meßrohre - senkrecht zu der Strömungsrichtung gesehen - "dicht" anordenbar sind und - wie in den Fig. 1 bis 3 zu sehen - auch dicht angeordnet sind. "Dicht" bedeutet hier, daß der Strömungsquerschnitt der Meßrohre 2a, 2b, 2c und 2d einen großen Teil des durch das Massedurchflußmeßgerät 1 konstruktiv verbauten Querschnitts ausmacht. Wenn beispielsweise lediglich zwei Meßrohre verwendet werden, ist eine solche kompakte Bauform nicht erzielbar.

In den Fig. 3 bis 5 ist z.B. dargestellt, daß die Meßrohre 2a und 2b sowie die Meßrohre 2c und 2d jeweils einer Meßrohrgruppe zugeordnet sind, indem die Meßrohre 2a, 2b und 2c, 2d einer Meßrohrgruppe mechanisch miteinander gekoppelt sind. Mit der hier in Rede stehenden mechanischen Kopplung sind jeweils mechanische Kopplungen innerhalb des Schwingbereiches der Meßrohre 2a, 2b, 2c, 2d des Massedurchflußmeßgeräts 1 gemeint, nicht also die Kopplungen an den ein- und auslaufseitigen Übergangsstücken 5a, 5b der Meßrohre 2a, 2b, 2c, 2d. Der Schwingbereich der Meßrohre liegt im wesentlichen zwischen den in den Fig. 1 und 3 dargestellten Schwingungsknotenplatten 6a und 6b, die in den dargestellten Ausführungsbeispielen alle vier Meßrohre 2a, 2b, 2c, 2d gleichermaßen relativ zueinander fixieren.

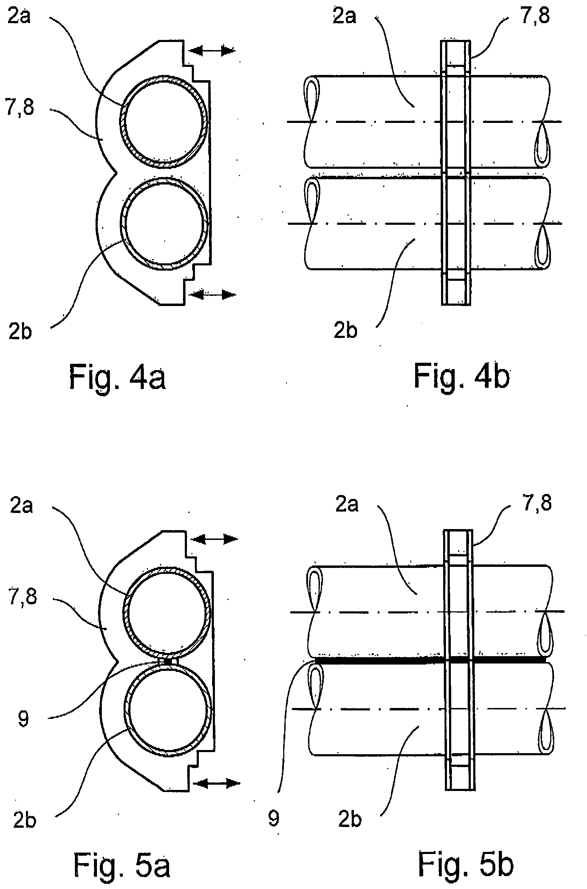

Die mechanische Kopplung ist bei dem Massedurchflußmeßgerät 1 gemäß Fig. 3 und Fig. 4 so ausgestaltet, daß die Meßrohre 2a, 2b und 2c, 2d einer Meßrohrgruppe in Durchströmungsrichtung nur punktuell mechanisch gekoppelt sind, vorliegend nämlich durch die Tragvorrichtung 7 z. B. eines Schwingungserzeugers 3 und durch die Tragvorrichtungen 8a, 8b der Schwingungsaufnehmer 4a, 4b. Die Tragvorrichtungen 7, 8a, 8b sind zweigeteilt, wobei jeder Teil jeweils eine Meßrohrgruppe fixiert. Eine Hälfte der Tragvorrichtungen 7a, 8a, 8b gruppiert also die eine Meßrohrgruppe, bestehend aus den Meßrohren 2a, 2b und die andere Hälfte der Tragvorrichtungen 7, 8a, 8b gruppiert die andere Meßrohrgruppe, bestehend aus den Meßrohren 2c und 2d. Die jeweils korrespondierenden Hälften der Tragvorrichtungen 7, 8a, 8b sind lediglich über einen Schwingungserzeuger 3 bzw. die Schwingungsaufnehmer 4a, 4b miteinander verbunden. Die Fig. 4a und 4b zeigen in zwei Seitenansichten die punktuelle Verbindung der Meßrohre 2a, 2b über die Tragvorrichtung 7, 8 des Schwingungserzeugers 3 bzw. der Schwingungsaufnehmer 4a, 4b.

In den Fig. 5a, 5b ist ein weiteres vorteilhaftes Ausführungsbeispiel dargestellt, bei dem die Meßrohre 2a, 2b einer Meßrohrgruppe in Durchströmungsrichtung gesehen im wesentlichen über ihre gesamte Erstreckung miteinander verbunden sind, vorliegend nämlich über einen Lötsteg 9 miteinander verlötet sind. Bei dieser Ausgestaltung werden die beiden miteinander verlöteten Meßrohre 2a, 2b der Meßrohrgruppe über ihre gesamte Erstreckungslänge hinweg miteinander fixiert, so daß sich die Meßrohre 2a, 2b nur als Einheit bewegen können.

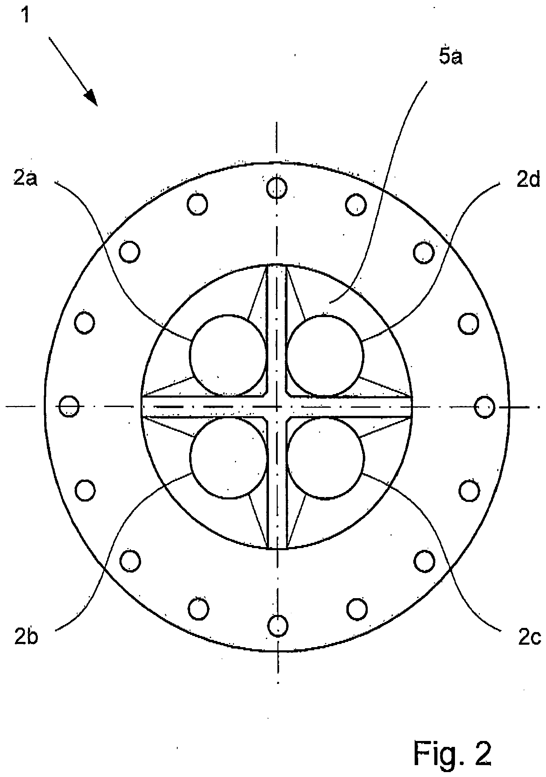

Vor allem in Fig. 2 ist gut zu erkennen, daß die vier Meßrohre 2a, 2b, 2c, 2d in Durchströmungsrichtung gesehen so angeordnet sind, daß ihre Mittelpunkte die Eckpunkte eines Quadrats bilden, was zu einem insgesamt symmetrischen Aufbau des Massedurchflußmeßgeräts 1 führt, wobei die Bauform außergewöhnlich kompakt ist, sowohl was die Länge der Meßrohre 2a, 2b, 2c, 2d betrifft als auch den Querschnitt des Massedurchflußmeßgeräts, der konstruktiv belegt ist. Vorteilhaft ist dabei, daß die Meßrohre 2a, 2b, 2c, 2d im vorliegenden Fall im wesentlichen parallel zueinander verlaufen und gerade ausgestaltet sind.

## Patentansprüche

1. Massedurchflußmeßgerät, das nach dem Coriolis-Prinzip arbeitet, mit wenigstens einem zu Schwingungen anregbaren, von einem Medium durchströmbaren Meßrohr (2), wenigstens einem Schwingungserzeuger (3) zur Anregung der Schwingungen des Meßrohrs (2) und wenigstens einem Schwingungsaufnehmer (4a, 4) zur Erfassung der angeregten Schwingungen des Meßrohrs (2), wobei mehr als zwei Meßrohre (2a, 2b, 2c, 2d) vorgesehen sind, insbesondere eine gerade Anzahl von Messrohren (2a, 2b, 2c, 2d) vorgesehen ist, und wobei ein- und auslaufseitig Übergangsstücke (5a, 5b) vorgesehen sind, in denen die Meßrohre (2a, 2b, 2c, 2d) ein- und auslaufseitig auseinander- bzw. zusammenlaufen,
**dadurch gekennzeichnet,**
**daß** die Meßrohre (2a, 2b, 2c, 2d) paarweise einander zugeordnet sind und jedes Paar mit separaten Schwingungserzeugern und/oder mit separaten Schwingungsaufnehmern ausgestattet ist, so daß zwei verschiedene Paare von Messrohren unabhängig voneinander anregbar und auswertbar sind.

2. Massedurchflußmeßgerät nach Anspruch 1, **dadurch gekennzeichnet, daß** die Meßrohre (2a, 2b, 2c, 2d) senkrecht zur Durchströmungsrichtung gesehen dicht angeordnet sind.

3. Massedurchflußmeßgerät nach Anspruch 1 oder 2, **dadurch gekennzeichnet, daß** die Meßrohre (2a, 2b; 2c, 2d) Meßrohrgruppen (2a, 2b, 2c, 2d) zugeordnet sind, insbesondere zwei Meßrohrgruppen, wobei die Meßrohre (2a, 2b, 2c, 2d) einer Meßrohrgruppe mechanisch miteinander gekoppelt sind, insbesondere die Meßrohrgruppen (2a, 2b, 2c, 2d) paarweise einander zugeordnet sind und jedes Paar mit separaten Schwingungserzeugern und/oder separaten Schwingungsaufnehmern ausgestattet ist.

4. Massedurchflußmeßgerät nach Anspruch 3, **dadurch gekennzeichnet, daß** die Meßrohre (2a, 2b, 2c, 2d) einer Meßrohrgruppe in Durchströmungsrichtung punktuell mechanisch gekoppelt sind, insbesondere durch Tragvorrichtungen (7) der Schwingungserzeuger (3) und/oder durch Tragvorrichtungen (8a, 8b) der Schwingungsaufnehmer (4a, 4b).

5. Massedurchflußmeßgerät nach Anspruch 3, **dadurch gekennzeichnet, daß** die Meßrohre (2a, 2b; 2c, 2d) einer Meßrohrgruppe in Durchströmungsrichtung gesehen im wesentlichen über ihre gesamte Erstreckung miteinander verbunden sind, insbesondere miteinander verlötet oder verschweißt sind.

6. Massedurchflußmeßgerät nach einem der Ansprüche 1 bis 5, **dadurch gekennzeichnet, daß** vier Meßrohre (2a, 2b, 2c, 2d) vorgesehen sind, wobei in Durchströmungsrichtung gesehen die Mittelpunkte der Meßrohre (2a, 2b, 2c, 2d) die Eckpunkte eines Rechtecks, eines Quadrats oder einer Raute bilden.

7. Massedurchflußmeßgerät nach einem der Ansprüche 1 bis 6, **dadurch gekennzeichnet, daß** die Meßrohre (2a, 2b, 2c, 2d) im wesentlichen parallel zueinander verlaufen, wobei die Meßrohre (2a, 2b, 2c, 2d) insbesondere gerade ausgestaltet sind.

## Claims

1. Mass flowmeter which operates according to the Coriolis principle, having at least one measuring tube (2) which can be excited to oscillation and through which a medium can flow, having at least one oscillation generator (3) for excitation of the oscillations of the measuring tube (2) and having at least one oscillation sensor (4a, 4) for detection of the excited oscillations of the measuring tube (2), wherein more than two measuring tubes (2a, 2b, 2c, 2d) are provided, in particular an even number of measuring tubes (2a, 2b, 2c, 2d) are provided, and wherein transition pieces (5a, 5b) are provided on the inlet and outlet sides, in which the measuring tubes (2a, 2b, 2c, 2d) diverge or converge on the inlet or outlet sides, respectively,
**characterized in**
**that** the measuring tubes (2a, 2b, 2c, 2d) are assigned to one another in pairs and each pair is equipped with separate oscillation generators and/or with separate oscillation sensors, so that two different pairs of measuring tubes can be excited and evaluated independently of one another.

2. Mass flow meter according to claim 1, **characterized in that** the measuring tubes (2a, 2b, 2c, 2d) are arranged in a sealed manner perpendicular to the direction of flow.

3. Mass flowmeter according to claim 1 or 2, **characterized in that** the measuring tubes (2a, 2b; 2c, 2d) are assigned to measuring tube groups (2a, 2b, 2c, 2d), in particular two measuring tube groups, wherein the measuring tubes (2a, 2b, 2c, 2d) of a measuring tube group are mechanically coupled to one another, in particular the measuring tube groups (2a, 2b, 2c, 2d) are assigned to one another in pairs, and each pair is equipped with separate oscillation generators and/or separate oscillation sensors.

4. Mass flowmeter according to claim 3, **characterized in that** the measuring tubes (2a, 2b, 2c, 2d) of a measuring tube group are mechanically coupled at points in the direction of flow, in particular by supporting devices (7) of the oscillation generators (3) and/or by supporting devices (8a, 8b) for the oscillation sensors (4a, 4b).

5. Mass flowmeter according to claim 3, **characterized in that** the measuring tubes (2a, 2b; 2c, 2d) of a group of measuring tubes, viewed in the direction of flow, are connected to one another essentially over their entire extent, in particular are soldered or welded to one another.

6. Mass flow meter according to one of claims 1 to 5, **characterized in that** four measuring tubes (2a, 2b, 2c, 2d) are provided, wherein the center points of the measuring tubes (2a, 2b, 2c, 2d), seen in the direction of flow, form the corner points of a rectangle, a square or a rhombus.

7. Mass flow meter according to one of claims 1 to 6, **characterized in that** the measuring tubes (2a, 2b, 2c, 2d) run essentially parallel to one another, wherein, in particular, the measuring tubes (2a, 2b, 2c, 2d) are straight.

## Revendications

1. Appareil de mesure de débit massique, fonctionnant selon le principe de Coriolis, comprenant au moins un tube de mesure (2) pouvant être parcouru par un milieu, pouvant être amené à osciller, au moins un générateur d'oscillations (3) destiné à générer les oscillations du tube de mesure (2) et au moins un enregistreur d'oscillation (4a, 4) pour détecter les oscillations générées du tube de mesure (2), plus de deux tubes de mesure (2a, 2b, 2c, 2d) étant prévus, en particulier un nombre entier de tubes de mesure (2a, 2b, 2c, 2d), et des pièces de transition (5a, 5b) du côté de l'entrée et du côté de la sortie étant prévues, dans lesquelles les tubes de mesure (2a, 2b, 2c, 2d) divergent et convergent du côté de l'entrée et du côté de la sortie,
**caractérisé en ce que**
les tubes de mesure (2a, 2b, 2c, 2d) sont associés les uns aux autres par paires et chaque paire est munie de générateurs d'oscillations séparés et/ou d'enregistreurs d'oscillations séparés, de telle sorte que deux paires différentes de tubes de mesure puissent être excitées et analysées indépendamment l'une de l'autre.

2. Appareil de mesure de débit massique selon la revendication 1, **caractérisé en ce que** les tubes de mesure (2a, 2b, 2c, 2d), vu perpendiculairement à la direction d'écoulement, sont disposés étroitement les uns à côté des autres.

3. Appareil de mesure de débit massique selon la revendication 1 ou 2, **caractérisé en ce que** les tubes de mesure (2a, 2b ; 2c, 2d) sont associés à des groupes de tubes de mesure (2a, 2b, 2c, 2d), en particulier deux groupes de tubes de mesure, les tubes de mesure (2a, 2b, 2c, 2d) d'un groupe de tubes de mesure étant accouplés les uns aux autres mécaniquement, en particulier les groupes de tubes de mesure (2a, 2b, 2c, 2d) étant associés par paires les uns aux autres et chaque paire étant munie de générateurs d'oscillations séparés et/ou d'enregistreurs d'oscillations séparés.

4. Appareil de mesure de débit massique selon la revendication 3, **caractérisé en ce que** les tubes de mesure (2a, 2b, 2c, 2d) d'un groupe de tubes de mesure sont accouplés mécaniquement ponctuellement dans la direction d'écoulement, en particulier par des dispositifs de support (7) des générateurs d'oscillations (3) et/ou par des dispositifs de support (8a, 8b) des enregistreurs d'oscillations (4a, 4b).

5. Appareil de mesure de débit massique selon la revendication 3, **caractérisé en ce que** les tubes de mesure (2a, 2b ; 2c, 2d) d'un groupe de tubes de mesure, vu dans la direction d'écoulement, sont connectés les uns aux autres essentiellement sur toute leur étendue, en particulier sont brasés ou soudés les uns aux autres.

6. Appareil de mesure de débit massique selon l'une quelconque des revendications 1 à 5, **caractérisé en ce que** quatre tubes de mesure (2a, 2b, 2c, 2d) sont prévus, les centres des tubes de mesure (2a, 2b, 2c, 2d), vu dans la direction d'écoulement, formant les coins d'un rectangle, d'un carré ou d'un losange.

7. Appareil de mesure de débit massique selon l'une quelconque des revendications 1 à 6, **caractérisé en ce que** les tubes de mesure (2a, 2b, 2c, 2d) s'étendent essentiellement parallèlement les uns aux autres, les tubes de mesure (2a, 2b, 2c, 2d) étant notamment réalisés sous forme rectiligne.
